# EUROPÄISCHE PATENTSCHRIFT

(11) **EP 0 596 964 B1**
(45) Veröffentlichungstag und Bekanntmachung des Hinweises auf die Patenterteilung: **03.01.1996**
(21) Anmeldenummer: 92916323.6
(22) Anmeldetag: 28.07.1992
(51) Int. Cl.: G21C 9/06

(54) **VERFAHREN UND GERÄT ZUM REKOMBINIEREN UND/ODER ZÜNDEN VON WASSERSTOFF, ENTHALTEN IN EINEM H 2-LUFT-DAMPF-GEMISCH, INSBESONDERE FÜR KERNKRAFTWERKE**
PROCESS AND DEVICE FOR RECOMBINING AND/OR IGNITING HYDROGEN CONTAINED IN A H 2-AIR-VAPOUR MIXTURE, ESPECIALLY FOR NUCLEAR POWER STATIONS
PROCEDE ET APPAREIL POUR LA RECOMBINAISON ET/OU L'ALLUMAGE DE L'HYDROGENE CONTENU DANS UN MELANGE H 2-AIR-VAPEUR, NOTAMMENT POUR LES CENTRALES NUCLEAIRES

(30) Priorität: 29.07.1991 DE 4125085
(43) Veröffentlichungstag der Anmeldung: 18.05.1994
(73) Patentinhaber: SIEMENS AKTIENGESELLSCHAFT, D-80333 München (DE)
(72) Erfinder: HILL, Axel, D-6081 Stockstadt (DE)
(86) Internationale Anmeldenummer: DE9200612
(87) Internationale Veröffentlichungsnummer: WO9303489

(56) Entgegenhaltungen:
- EP-A- 0 233 564
- EP-A- 0 416 140
- DE-A- 4 015 228
- DE-C- 3 929 327
- US-A- 3 243 631
- US-A- 4 741 879
- DATABASE WPIL, Week 8831, Derwent Publications Ltd., London, GB; AN 88-219326 & SU-A-1 368 023

## Beschreibung

Die Erfindung bezieht sich auf ein Verfahren zum Rekombinieren und/oder Zünden von Wasserstoff, enthalten in einem H₂-Luft- Dampf-Gemisch, gemäß Präambel des Patentanspruchs 1, ferner auf ein Gerät zur Rekombination und/oder Zündung des in einem H₂-Luft-Dampf- Gemisch enthaltenen Wasserstoffs gemäß Präambel des Patentanspruchs 6.

Ein solches Verfahren und auch ein solches Gerät sind bekannt durch die EP-A1-0 303 144. Dabei ist ein Katalysatorkörper in einem vertikal verlaufenden Rohr mit Abstand zur Rohrinnenwand angeordnet. Die Stirnseiten des Rohres sind mit druckabhängig und/oder temperaturabhängig öffnenden Verschlüssen versehen. Als Kataysatormaterial wird insbesondere Palladium oder Platin verwendet, wobei eine Rekombination bereits im Bereich nicht zündfähiger Wasserstoffkonzentrationen erfolgt. Am Katalysatorkörper sind Drähte befestigt, welche eine katalytische Beschichtung aufweisen oder aus einem solchen Material bestehen und welche in Strömungsrichtung des H₂-Luft-Dampf-Gemisches durch das Rohr gesehen vor und/oder hinter dem Katalysatorkörper angeordnet sein können.

Die Erfindung geht von der Erkenntnis aus, daß das eingangs genannte Verfahren nicht nur bei der Rekombination nicht zündfähiger Wasserstoffkonzentrationen zuverlässig arbeiten und an der sogenannten unteren Zündgrenze eine zuverlässige Zündung herbeiführen muß, sondern daß ebenso an der oberen Zündgrenze (sogenanntes fettes Gemisch oder H₂-Luft-Dampf-Gemisch mit relativ hoher H₂-Konzentration) eine zuverlässige Zündung des Wasserstoffs im zuströmenden Gemisch gewährleistet sein muß.

Dies ist deshalb wichtig, weil nach einsetzenden Kühlvorgängen und Kondensation des Wasserdampfes ein Einlaufen in das Zündgebiet mit hohen H₂-Konzentrationen erfolgen kann.

Durch die Erfindung sollen ein Verfahren und ein Gerät geschaffen werden, welche im Sinne der vorstehend gestellten Anforderungen ein Rekombinieren und Zünden von Wasserstoff nicht nur an der unteren Zündgrenze bei etwa 4 bis 5 Vol.-% Wasserstoff, sondern auch an der oberen Zündgrenze (bei etwa 10 oder mehr Vol.-% Wasserstoff) ermöglichen, und dies auch bei wasserdampf- haltiger, also inertisierender, Atmosphäre.

Gegenstand der Erfindung ist ein Verfahren zum Rekombinieren und Zünden von Wasserstoff der eingangs genannten Art, welches zur Lösung der gestellten Aufgabe durch die folgenden Merkmale gekennzeichnet ist:
a) ein erster Teilstrom des H₂-Luft-Dampf-Gemisches wird durch wenigstens einen ersten Kanal hindurchgeleitet und durch Kontakt mit einer eine katalytische Beschichtung aufweisenden ersten Kanalwand dieses Kanals einer katalytischen Reaktion zur Rekombination von H₂ und O₂ zu H₂O unterworfen,
b) ein zweiter Teilstrom des H₂-Luft-Dampf-Gemisches wird zusätzlich zum ersten Teilstrom durch wenigstens einen zweiten Kanal mit Kanalwand hindurchgeleitet und dabei an mindestens einem Zündelement vorbeigeführt, welches auf eine solche Zündtemperatur aufgeheizt wird, daß der zweite Teilstrom bei Erreichen oder Überschreiten seiner Zündgrenze gezündet wird,
c) die bei der katalytischen Reaktion im ersten Kanal freiwerdende Wärme wird, zumindest zum Teil, auf den zweiten Kanal zu dessen Vorwärmung übertragen.

Man erreicht auf diese Weise, daß die Heizwärme auf das Zündelement nicht abhängig von Fremdenergiequellen, sondern inhärent sicher übertragen werden kann. Weitere vorteilhafte Weiterbildungen des Verfahrens nach Anspruch 1 sind in den Patentansprüchen 3 bis 5 angegeben.

Durch die DE-C-3 929 327 ist ein Funkenzünder für Wasserstoff zu dessen Rekombination mit Sauerstoff bei niedrigen Wasserstoffkonzentrationen unterhalb der Explosionsgrenze bekannt, wobei die Zündfunkenstrecke von einer katalytisch beschichteten Schutzvorrichtung umgeben ist. Die durch die katalytische Verbrennung des Wasserstoffs verursachte Erwärmung der Schutzvorrichtung soll chemische Abbruchreaktionen an der Schutzvorrichtung vermindern, und die infolge der katalytischen Verbrennung entstehenden Hydroxyl-Radikale sollen zur Erhöhung der Zündfähigkeit des Wasserstoffgemisches beitragen. Demgegenüber geht es bei der Erfindung um die Zweiteilung des den Wasserstoff enthaltenden H₂-Luft-Dampf-Gemisches, um die Aufheizung des Zündelementes durch die bei der katalytischen Rekombination im ersten Teilstrom entstehende Wärme und im Ergebnis um eine bessere Zündung von Gemischen an der oberen Zündgrenze.

Zur Übertragung der im ersten Kanal freiwerdenden Wärme wird die zweite Kanalwand in eine wärmeübertragende Relation, insbesondere in wärmeleitenden Kontakt, mit dem ersten Kanal gebracht, so daß während der Rekombinationsvorgänge im ersten Kanal erzeugte Wärmemengen auf die zweite Kanalwand übertragen werden und das durch den zweiten Kanal strömende H₂-Luft-Dampf-Gemisch an der zweiten Kanalwand vorgewärmt wird, bevor oder während es an dem Zündelement vorbeiströmt und an diesem gezündet wird. Unter wärmeübertragender Relation wird verstanden, daß die Wärme vom ersten auf den zweiten Kanal und das oder die Zündelement(e) durch Wärmestrahlung, durch Konvektion und durch Wärmeleitung übertragen wird oder werden kann, wobei der Wärmeleitung durch die Kanalwände ein wesentlicher Übertragungsanteil zukommt. Es ist gefunden worden, daß überraschenderweise die zweite metallische Kanalwand selbst als Flächenzündelement verwendet werden kann. Die zweite metallische Kanalwand arbeitet dann als großflächiger thermischer Zünder. Es ist möglich, sie aufgrund der im ersten Kanal ablaufenden katalytischen Rekombinationsvorgänge und der Übertragung der dabei entstehenden Wärme auf Temperaturen von z.B. 700 bis 720° C aufzuheizen. Ein solcher thermischer Zünder arbeitet bevorzugt an der oberen Zündgrenze, und dort sehr wirkungsvoll. Es können zusätzlich oder anstelle dieser oder dieses Flächenzündelemente(s) auch ein oder bevorzugt mehrere Spitzenzündelemente verwendet werden, welche mit diskreten Zündspitzen in den Gasströmungspfad des zweiten Teilstroms hineinragen. In der Ausführung als dünne Drähte oder "Fädchen" mit katalytischer Beschichtung (z.B. Pt oder Pd) arbeiten solche Spitzenzündelemente bevorzugt an der unteren Zündgrenze als katalytische Zünder; in der Ausführung als unbeschichtete, gut wärmeleitende Rohre oder Drahtspiralen, z.B. aus Cu bestehend, können solche Spitzenzündelemente auch als thermische Zünder eingesetzt werden.

Gemäß einer bevorzugten Ausführungsform wird der erste Teilstrom im ersten Kanal im wesentlichen vertikal von unten nach oben geleitet, so daß der zugehörige Volumenstrom durch thermisch bedingte Auftriebskräfte stabilisiert wird. Im Zusammenhang damit ist es auch günstig, wenn auch der zweite Teilstrom im zweiten Kanal im wesentlichen vertikal von unten nach oben geleitet wird, so daß der zugehörige Volumenstrom durch thermisch bedingte Auftriebskräfte stabilisiert wird. Im ersten und zweiten Kanal ergeben sich damit Konvektionsströme, und die durch Zündung im zweiten Kanal hervorgerufenen Druckwellen vermögen diese Konvektionsströme nicht dauerhaft zu stören oder etwa in ihrer Strömungsrichtung umzukehren.

Zur Vergrößerung der Verweilzeit kann der zweite Teilstrom angedrosselt werden. Zweckmäßigerweise werden die aus dem ersten und dem zweiten Kanal austretenden ersten und zweiten Teilströme getrennt voneinander längs einer Trennstrekke solcher Länge geführt, daß ein Eindringen des ersten auslaßseitigen Teilstroms in den zweiten Kanal und des zweiten auslaßseitigen Teilstroms in den ersten Kanal verhindert wird.

Die mit dem Verfahren nach der Erfindung erreichbaren Vorteile sind insbesondere in folgendem zu sehen:
- H₂-Zündung an der unteren Zündgrenze (O₂-Überschuß, H₂-Mangel) von H₂-Luft-Dampf-Gemischen,
- H₂-Zündung an der oberen Zündgrenze (H₂-Überschuß, O₂-Mangel) von H₂-Luft-Dampf-Gemischen,
- merkliche H₂- und O₂- Rekombination zu H₂O im Bereich nicht zündfähiger Konzentrationen, deshalb Einsatz des Verfahrens nicht nur zum Zünden, sondern auch zum großflächigen Rekombinieren,
- Einsatzmöglichkeit insbesondere in der Kerntechnik, aber auch in der chemischen und petrochemischen Industrie, um nur einige Beispiele zu nennen.

Zur Lösung der eingangs definierten Aufgabe ist gemäß Anspruch 6 Gegenstand der Erfindung auch ein Gerät zur Rekombination und Zündung des in einem H₂-Luft-Dampf-Gemisch enthaltenen Wasserstoffs, mit
a) wenigstens einem ersten Kanal mit einer Kanalwand, deren Wandoberfläche eine katalytische Beschichtung zur Rekombination von vorbeiströmendem Wasserstoff und Sauerstoff aufweist,
b) wenigstens einem parallel zum ersten Kanal geschalteten zweiten Kanal, dessen Kanalwand mit mindestens einem vorzugsweise metallischen Zündelement versehen ist, welches auf eine solche Zündtemperatur aufheizbar ist, daß es vorbeiströmende, zündfähige H₂-Luft-Dampf-Gemische zur Entzündung bringt,
c) Mitteln zur Einkopplung der bei den Rekombinationsvorgängen im ersten Kanal entstehenden Wärme in den zweiten Kanal.

Das Verfahren und das Gerät nach der Erfindung einschließlich der Gegenstände nach den Unteransprüchen 7 bis 26 werden im folgenden anhand mehrerer, in der Zeichnung dargestellter Ausführungsbeispiele noch näher beschrieben. In der Zeichnung zeigt jeweils in vereinfachter, zum Teil schematischer Darstellung:
Figur 1 ein Gerät nach der Erfindung in prinzipieller Darstellung im Längsschnitt, geeignet zur Verwirklichung des Verfahrens, wobei im Außenumfangsbereich des Geräts nach Figur 1 eine zweite Ausführung mit äußerem zweiten Kanal angedeutet ist,
Figur 2 einen Querschnitt durch das Gerät nach Figur 1 längs der Schnittebene II-II,
Figur 3 ein drittes Ausführungsbeispiel in Gestalt einer Abwandlung des Gegenstandes nach Figur 1, in detaillierterer Darstellung,
Figur 4 den Schnitt längs der Schnittebene IV-IV des Gegenstands nach Figur 3,
Figur 5 vereinfacht ein aus einem spiralig gewickelten Blech aufgebautes Gerät, in liegender Position (Arbeitsposition ist die aufrechte),
Figur 6 ebenfalls perspektivisch eine weitere Ausführung des Gerätes mit quaderförmigem Gehäuse und darin untergebrachten, einander kreuzenden, katalytisch beschichteten Blechen für den ersten Kanal sowie einem zentralen Rechteckkanal zur Bildung des zweiten Kanals,
Figur 7 eine Einzelheit des Blechrasters nach Fig. 6 im Detail und
Figur 8 ein Querschnittsdetail einer weiteren Ausführungsform, bei welchem nicht einander kreuzende Bleche, sondern nur eine Schar zueinander paralleler Bleche verwendet ist, welche durch wellen- oder zickzackförmige Zwischenbleche auf Abstand gehalten und miteinander verbunden sind.

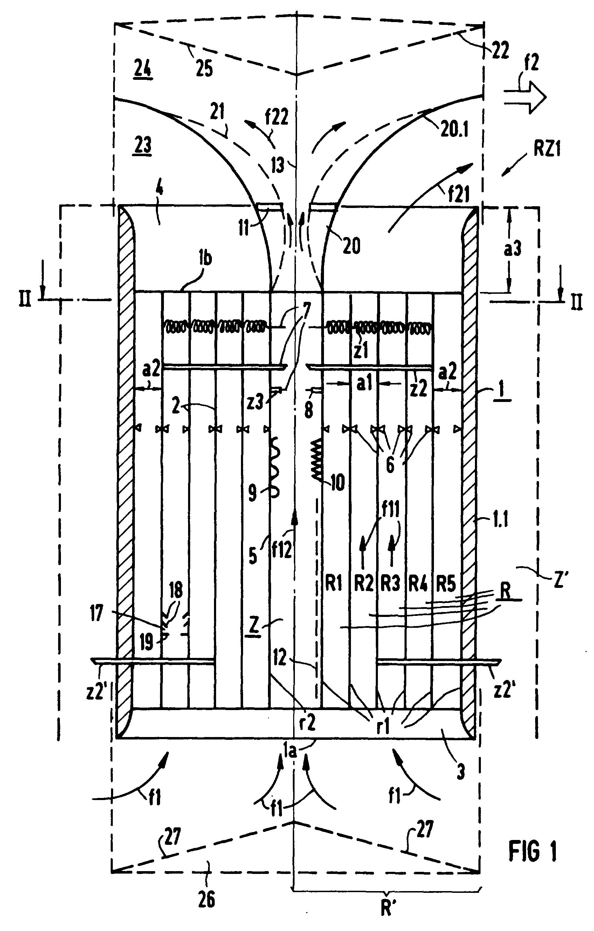

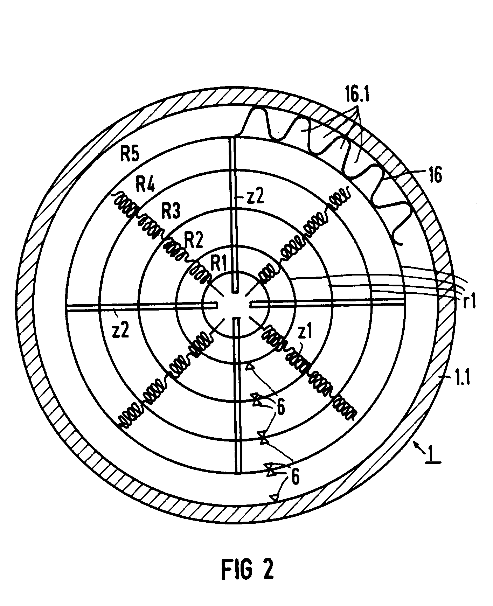

Bei der in Figuren 1 und 2 dargestellten ersten Ausführungsform RZ1 eines Gerätes nach der Erfindung sind in einem rohrförmigen Gehäuse 1 konzentrische, ringförmige Bleche 2 jeweils mit Abstand a1 zueinander und a2 zur Wand des Gehäuses 1 angeordnet. Das rohrförmige Gehäuse 1 besteht aus Edelstahl mit einer Gehäusewand 1.1, deren Wanddicke aus Festigkeitsgründen 1 mm bis zu mehreren Millimetern betragen kann. Das Gehäuse 1 weist an seinem unteren Ende eine Einlaßöffnung 3 und an seinem oberen Ende eine Auslaßöffnung 4 für das H₂-Luft-Dampf-Gemisch auf, welches durch die Pfeile fl im Bereich der Einlaßöffnung 3, durch die Pfeile f11 beim Durchströmen eines ersten Kanals R, durch die Pfeile f12 beim Durchströmen eines zweiten Kanals Z symbolisiert ist. Am Ausgang des ersten und zweiten Kanals R, Z sind die entsprechenden Teilströme mit f21 bzw. f22 bezeichnet, nach ihrer Vereinigung mit f2. Bei den Kanälen R und Z kann es sich um Kanalsysteme mit jeweils mehreren Unterkanälen oder um einfache Kanäle handeln. Der Ausdruck "Kanalsysteme" soll deshalb im folgenden - wenn nichts Näheres ausgesagt ist - sowohl einfache Kanäle als auch Mehrfach-Kanalanordnungen umfassen.

Das erste Kanalsystem R wird von ersten Kanalwänden r1 bzw. deren Wandoberflächen begrenzt, welche von den ringförmigen, konzentrischen Blechen 2, dem Innenumfang der Gehäusewand 1.1 und dem Außenumfang eines Zentralrohres 5 gebildet werden. Die auf die Oberflächen dieser ersten Kanalwände r1 weisenden schwarzen Pfeile 6 besagen, daß die dem ersten Teilstrom f11 des Gemisches f1 aussgesetzten Wandoberflächen der ersten Kanalwände rl eine katalytische Beschichtung zur Rekombination des im Gemisch f1 enthaltenen Wasserstoffs aufweisen. Als geeignete katalytische Beschichtung haben sich Palladium oder Platin, vorzugsweise Platin, erwiesen, wobei diese Metalle auf einer Trägerschicht der ersten Kanalwände r1 (nicht dargestellt), die eine ausreichende Oberflächenrauhigkeit aufweist, fein verteilt fixiert sind.

Das schon erwähnte zweite Kanalsystem Z ist parallel zum ersten Kanalsystem R geschaltet und weist wenigstens eine zweite Kanalwand r2 auf, deren Wandoberfläche vom Innenumfang des Zentralrohres 5 gebildet wird und die dem zweiten Teilstrom f12 des Gemisches f1 ausgesetzt ist. Dem zweiten Kanalsystem Z sind Zündelemente z zugeordnet, welche im Beispiel nach Figuren 1 und 2 als Spitzenzündelemente z1, z2 bzw. z3 ausgeführt sind. Für die als Drahtspiralen ausgebildeten Zündelemente z1 und die stift- oder röhrenförmigen Zündelemente z2 ist charakteristisch, daß sie in Strömungsräumen, in diesem Fall in den Ringkanälen R1 bis R4 des ersten Kanalsystems R angeordnet sind, wenigstens eine Kanalwand der ersten Kanalwände r1 bzw. die Kanalwand r2 metallisch kontaktieren und mit ihrer Spitze 7 durch die Kanalwand r2 des zweiten Kanalsystems Z hindurch sich als Spitzenzündelemente in den Kanalquerschnitt des zweiten Kanalsystems Z erstrecken. Die Zündelemente z3 stehen lediglich mit der zweiten Kanalwand r2 metallisch-leitend in Kontakt. Die Zündelemente z1 und z2 durchdringen, vorzugsweise auf Radien, das zweite Kanalsystem (vgl. Figur 2) und sind deshalb der in diesem entstehenden Rekombinationswärme auf mehrfache Weise ausgesetzt. Die bei den Rekombinationsvorgängen im erstenn Kanalsystem R entstehenden heißen Gase f11 geben ihre Wärme zunächst unmittelbar an die Zündelemente z1, z2 ab, wenn sie an diesen vorbeiströmen. Sie erwärmen jedoch auch die ersten Kanalwände r1, mit denen die Zündelemente z1, z2 metallisch-leitend kontaktiert sind, so daß auch im Wege der Wärmeleitung Wärme auf die Zündelemente z1, z2 übertragen wird. Außer der Wärmeübertragung aufgrund von Konvektion und Wärmeleitung wird auch durch Wärmestrahlung ein Teil der Wärme auf die Zündelemente z1, z2 übertragen. Denn die metallischen, zylindrischen Kanalwände r1 wirken quasi wie Spiegel, welche die Infrarot-Wärmestrahlung radial nach innen werfen, so daß nicht nur die jeweils innere von der jeweils äußeren ersten Kanalwand r1 angestrahlt wird, sondern als letztes Glied dieser Wärmestrahlungsübertragungskette auch die zweite Kanalwand r2 aufgeheizt wird.

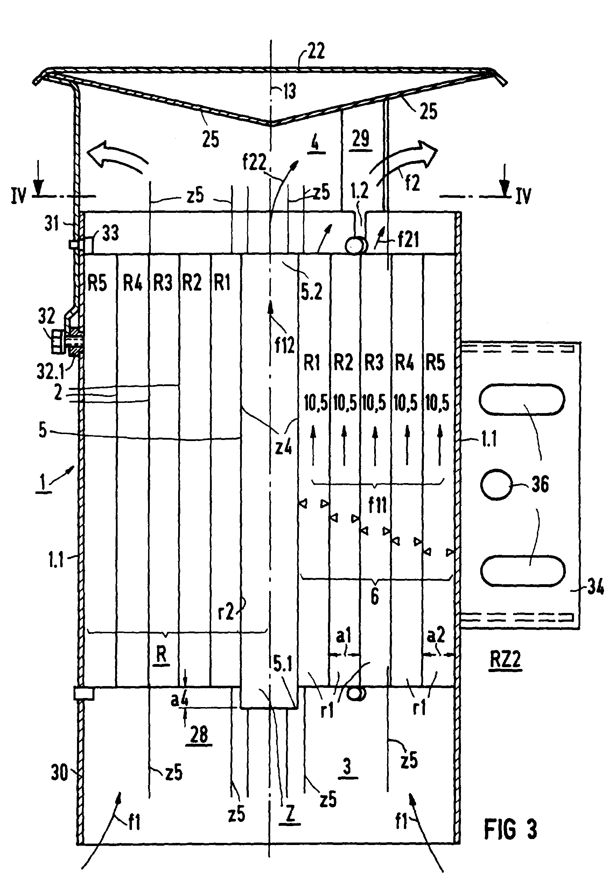

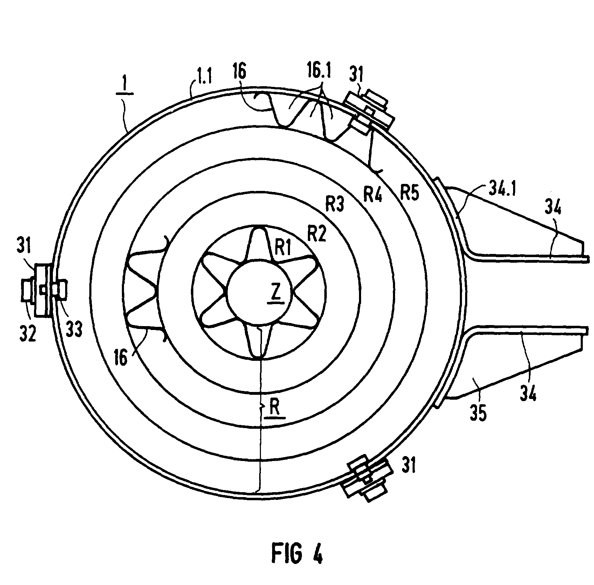

Im einzelnen bestehen die Zündelemente z1 aus einem gewendeltem Platindraht. Diese Zündelemente dienen der katalytischen Zündung im ersten Kanalsystem R und - weil sie mit einer Spitze 7 in das zweite Kanalsystem Z ragen - auch zur katalytischen und/ oder thermischen Zündung in diesem zweiten Kanalsystem Z. Die Zündelemente z2 bestehen vorzugsweise aus Kupferrohren oder -stäben; diese wirken mit ihrer Spitze 7 bevorzugt als thermische Zünder im zweiten Kanalsystem Z. Das gleiche trifft zu für die dritten als Spitzenzündelemente ausgeführten Zündelemente z3, bei denen die Spitze 7 von einem kleinen massiven Metallklötzchen 8 getragen wird, welches wiederum am Innenumfang des Zentralrohres 5, z.B. durch Punktschweißen oder durch Verschraubung, befestigt ist. Die zweiten Kanalwände r2 können selbst als Flächenzündelemente zur thermischen Zündung dienen, wie es anhand der Figuren 3 und 4 noch erläutert wird; im Beispiel nach Figuren 1 und 2 ist diese Wirkung zusätzlich zur Zündwirkung der Spitzenzündelemente z1 bis z3.

Wie es durch die Wellenlinie 9 und die Zick-zack-Linie 10 partiell für das Zentralrohr 5 angedeutet ist, kann die Oberfläche des zweiten Kanalsystems Z durch wellrohr- oder spiralförmige Ausbildung der zweiten Kanalwand r2 vergrössert sein. Verläuft die zweite Kanalwand r2 zusätzlich zur wellrohrartigen Ausbildung 9 oder der im Querschnitt zick-zack-förmigen Ausbildung 10 spiral- oder schraubenförmig, dann hat dies den Vorteil, daß dem zweiten Teilstrom f12 eine Drehströmungskomponente überlagert wird, wodurch die Verweilzeit des zweiten Teilstroms innerhalb des zweiten Kanalsystems vergrößert wird. Durch eine solche Wandausbildung wird im übrigen eine Drosselwirkung erzielt. Eine solche Wirkung kann auch durch eine am auslaßseitigen Ende des zweiten Kanalsystems Z gesondert angebrachte Strömungsdrossel 11 erreicht werden.

Die zweite Kanalwand r2 kann partiell mit einer katalytischen Beschichtung 12, vorzugsweise aus Pt oder Pd, versehen sein, wie es gestrichelt angedeutet ist; bevorzugt wird indessen eine katalytische Beschichtung 6 der Wandteile nur dem ersten Kanalsystem R zugeordnet.

Wie bereits angedeutet, sind zur Bildung des ersten Kanalsystems R Zylinderbleche 2 unterschiedlichen Durchmessers koaxial um die Rohrachse 13 und konzentrisch zueinander innerhalb der hohlzylindrischen Gehäusewand 1.1 angeordnet, wobei Einlaß- und Auslaßöffnung 3, 4 an den Zylinder-Stirnseiten angeordnet sind. Zur Halterung und Abstandshalterung der Zylinderbleche 2 dienen die Zwischenbleche 16 (Figur 2), wie noch erläutert wird.

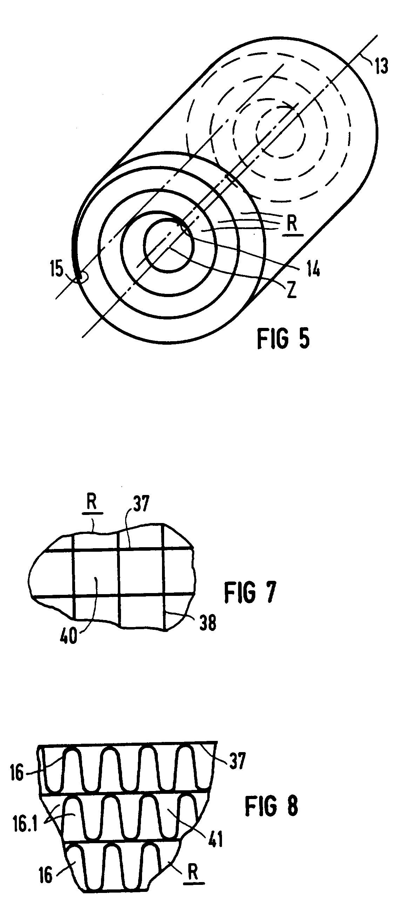

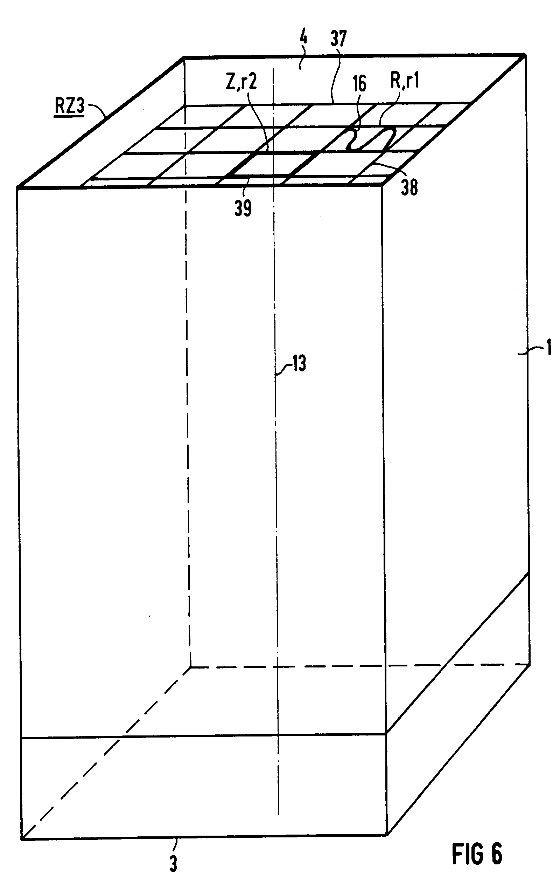

Gemäß einer Abwandlung des ersten Ausführungsbeispiels nach den Figuren 1 und 2 können auch zur Bildung des ersten Kanalsystems R spiralig und mit Abstand zueinander gewickelte Bleche die zentrische Gehäuseachse 13 innerhalb der hohlzylindrischen Gehäusewand 1.1 umgeben, wobei Einlaß- und Auslaßöffnung 3, 4 an den Stirnseiten einer solchen Spirale angeordnet sind. Bei der dargestellten Ausführung ist das zweite Kanalsystem Z vom Innenumfang des innersten Zylinderblechs in Form des Zentralrohrs 5 begrenzt. Bei einem spiralig gewickelten ersten und zweiten Kanalsystem ist es zweckmäßig, das zweite Kanalsystem Z vom Innenumfang der innersten Spiralwindung der spiralig gewickelten Bleche zu begrenzen, wie es schematisch in Figur 5 dargestellt ist, wobei Anfang und Ende des spiralig gewickelten Bleches mit den angrenzenden Blechpartien zu verbinden sind, zweckmäßigerweise durch je eine Schweißnaht oder eine Punktschweißreihe 14 bzw. 15.

Zurück zum Ausführungsbeispiel nach den Figuren 1 und 2: Zur Vergrößerung der katalytischen Oberflächen und zur Strömungsstabilisierung ist es vorteilhaft, in wenigstens einem, in mehreren oder in allen der Ringkanäle R1 bis R5 katalytisch beschichtete, gewellte Zwischenbleche 16 anzuordnen, wie es in Figur 2 auf einem Umfangsteilstück des Ringkanals R5 eingezeichnet ist. Dieses zusätzlich vorgesehene gewellte Zwischenblech 16 hat den Vorteil, daß es zusammen mit den zylindrischen Blechen 2 für die ersten Kanalwände r1 ein Befestigungssystem bilden kann, indem das jeweilige gewellte Zwischenblech 16 und die Zylinderbleche 2 durch Schweißen, Löten oder Kleben miteinander, mit der Gehäusewand 1.1 und mit dem Zentralrohr 5 verbunden werden. Durch die Zwischenbleche 16 und Bleche 2 wird eine Vielzahl von Unterkanälen 16.1 gebildet.

Das Zentralrohr 5 weist lediglich an seinem Außenumfang eine katalytische Beschichtung auf; an seinem Innenumfang kann es partiell mit der erwähnten katalytischen Beschichtung 12 versehen sein, außerdem mit einem sauerstoffspendenden Material. Im ersten Kanalsystem R können - ebenso wie im zweiten Kanalsystem Z - turbulenzvergrößernde Mittel vorgesehen sein, z.B. in Gestalt von sogenannten Turbolatoren 17. Dies sind Einbauten oder Schikanen innerhalb der Ringräume R1 bis R5 in Form von jalousieartigen Leisten 18, welche mit ihren Anströmkanten entgegen der Strömungsrichtung gerichtet sind. Als Turbolatoren 17 können auch in Verbindung mit den jalousieartigen Leisten 18 drosselblendenartige Einbauten 19 Verwendung finden, welche den Leisten 18 in Strömungsrichtung gesehen vorgeschaltet sind. Dadurch wird die Strömungsgeschwindigkeit lokal vergrößert und der Verwirbelungseffekt durch die Leisten 18 verbessert.

Gemäß einer zweiten abgewandelten Ausführungsform kann das zweite Kanalsystem Z auch in einem Ringraum am Außenumfang des Gerätes angeordnet sein. Dieses alternative zweite Kanalsystem ist mit Z' bezeichnet und durch gestrichelte Linien angedeutet. Demgemäß würde ein erstes Kanalsystem R' durch die Ringräume R1 bis R5 und den Innenraum des Zentralrohrs 5 gebildet. In diesem Fall würden die Zündelemente, z.B. die stab- oder röhrenförmigen Zündelemente z2, von innen nach außen orientiert sein und in den äußeren Ringraum des zweiten Kanalsystems Z' ragen, siehe Zündelemente z2. Diese alternative Ausführungsform müßte jedoch an ihrem Außenumfang thermisch isoliert werden, damit nicht zu viel Wärme aus dem zweiten Kanalsystem Z' nach außen, vor allem durch Abstrahlung, verloren geht. Deshalb wird der ersten Ausführung mit erstem Kanalsystem R und zweitem vom ersten Kanalsystem umgebenen Kanalsystem Z, wie es in den Figuren 1 und 2 dargestellt ist, der Vorzug gegeben.

Wie bereits erläutert, befinden sich die Einlaßöffnung 3 für das erste und das zweite Kanalsystem R, Z an einer unteren, offenen Stirnseite 1a des Gehäuses 1 und die Auslaßöffnung 4 an einer oberen, offenen Stirnseite lb des Gehäuses 1, wobei dementsprechend auch die Ringräume R1 bis R5 und das Zentralrohr 5 an ihren beiden Stirnseiten offen sind. An den inneren, das zweite Kanalsystem Z bildenden Blechkanal des Zentralrohrs 5 schließt sich ein trompetenartiger Auslaß-Diffusor 20 an. Innerhalb dieses Auslaß-Diffusors 20 befindet sich die Blende für die Strömungsdrossel 11 an einer Stelle, die zum Einlaßende des Diffusors einen Abstand a3 hat, der etwa ein Drittel der gesamten axialen Länge des Diffusors 20 ausmacht. Die Strömungsdrossel 11 kann auch Teil eines Venturi-Rohres 21 sein, wie es gestrichelt angedeutet ist. In diesem Fall ist das Venturi-Rohr 21 zweckmäßigerweise in den Auslaß-Diffusor 20 eingebaut.

Wie es schematisch angedeutet ist, ist die Auslaßöffnung 4 durch ein mit Vertikalabstand zu ihr angeordneten, schematisch und gestrichelt dargestellten Deckel 22 derart abgedeckt, daß ein lateraler Ausströmquerschnitt 23 für das erste Kanalsystem R und 24 für das zweite Kanalsystem Z frei bleiben. Der Deckel 22 weist Strömungsleitflächen 25 zur Unterstützung der Strömungsumlenkung von der vertikalen Richtung (Strömungspfeile f11 und f12) in die horizontale Richtung (Strömungspfeil f2) auf. Auch unterhalb der Einlaßöffnung 3 ist in Figur 1 ein (zweiter) Strömungsleitkörper 26 dargestellt, welcher Strömungsleitflächen 27 zur Umlenkung der Einströmung des Gemisches von der lateralen in die vertikale Richtung aufweist, wie es die Strömungspfeile f1 verdeutlichen. Der trompetenartige Auslaß-Diffusor 20 bewirkt, daß die aus dem ersten Kanalsystem R und dem zweiten Kanalsystem Z austretenden ersten und zweiten Teilströme f21, f22 getrennt voneinander längs einer Trennstrecke, entsprechend der bogenförmigen Auslaß-Diffusor-Kontur 20.1, solcher Länge geführt werden, daß ein Eindringen des ersten auslaßseitigen Teilstroms f21 in das zweite Kanalsystem Z und des zweiten auslaßseitigen Teilstroms f22 in das erste Kanalsystem R verhindert wird.

Das zweite grundsätzliche Ausführungsbeispiel eines Gerätes nach der Erfindung gemäß Figuren 3 und 4 gleicht im grundsätzlichen Aufbau demjenigen nach den Figuren 1 und 2, weshalb gleiche Teile auch mit den gleichen Bezugszeichen versehen sind. Unterschiede liegen in der Ausbildung der Zündelemente und darin, daß der Bereich der Einlaßöffnung 3 und derjenige der Auslaßöffnung 4 konstruktiv vereinfacht sind. Durch die zweite Kanalwand r2 des zweiten Kanalsystems Z ist ein Zündelement z4 in Gestalt eines Flächenzündelementes gebildet, welches als thermischer Zünder arbeitet. Der mechanisch feste Zusammenhalt der zylindrischen Bleche 2, des Zentralrohres 5 und des Gehäuses 1 bzw. seiner Wand 1.1 wird wieder dadurch ereicht, daß gewellte, beidseits katalytisch beschichtete Zwischenbleche 16 (Figur 4) sich jeweils in einem der Ringräume R1 bis R5 befinden und mit den anliegenden Blechen 2 bzw. dem Zentralrohr 5 durch Schweissen, Hartlöten oder Kleben, vorzugsweise durch Punktschweißen, verbunden sind. Das Zentralrohr 5 für das zweite Kanalsystem Z hat an seinem Einströmende einen geringen Überstand a4 von z.B. 8 mm, wodurch Rückwirkungen der Zündvorgänge im zweiten Kanalsystem Z auf das erste Kanalsystem reduziert oder vermieden werden. Die Flächenzündelemente z4 arbeiten (wie erwähnt) als thermische Zünder an der oberen Zündgrenze. Zusätzlich zu den Flächenzündelementen z4 sind dünne, eine katalytische Oberfläche aufweisende Drähte, vorzugsweise bestehend aus Platin, als Spitzenzündelemente z5 dem zweiten Kanalsystem Z zugeordnet. Diese kontaktieren die zweite Kanalwand r2 metallisch, und zwar am Einströmende 5.1 des Zentralrohres 5, sie ragen deshalb nach unten in den Einströmraum 28 hinein. Vorzugsweise sind weitere Spitzenzündelemente z5 dem Ausströmende 5.2 des Zentralrohres 5 bzw. der zweiten Wandteile r2 zugeordnet und hierzu mit dem Zentralrohr 5 metallisch kontaktiert. Diese Spitzenzündelemente z5 stehen deshalb wie Antennen vertikal nach oben ausgerichtet und ragen in den Ausströmraum 29. Weitere dieser Spitzenzündelemente z5 in Form von dünnen Platindrähtchen oder "Fädchen" sind an den Blechen 2 des ersten Kanalsystems R zumindest an einem Ende befestigt, vorzugsweise sowohl im Bereich der Einströmkammer 28 als auch im Bereich der Ausströmkammer 29. Die Zündelemente z5 arbeiten im Bereich der unteren Zündgrenze des im Gemisch f1 enthaltenen Wasserstoffs.

Das als Ganzes mit RZ2 bezeichnete Gerät nach den Figuren 3 und 4 weist eine untere zylindrische Schürze 30 auf, welche die Einströmkammer 28 umgibt und eine Fortsetzung der Gehäusewand 1.1 bildet. Am oberen Ende wird die Ausströmkammer 29 wieder durch einen Deckel 22 überdacht; dieser ist mittels dreier, gleichmäßig über den Umfang verteilter Tragstreben 31 gehalten. Die Tragstreben 31 sind an der Gehäusewand 1.1 an deren oberen Rand von außen angesetzt und festgeschraubt, siehe die pro Haltestrebe 31 vorgesehenen beiden Schraubverbindungen 32 und 33. Die oberen Schrauben 33 durchdringen die Gehäusewand 1.1 in Schlitzen 1.2, die unteren 32 pressen die abgekröpften Enden der Tragstreben 31 gegen Gewindebüchsen 32.1, welche außen an der Gehäusewand 1.1 befestigt sind. Zur Befestigung des Gerätes RZ2 an einer Haltestruktur, z.B. einem vertikalen Träger (nicht dargestellt), sind zwei zueinander beabstandete Tragflansche 34 vorgesehen, welche jeweils mit einem Bogenstück 34.1 am Außenumfang der Gehäusewand 1.1 festgeschweißt sind. Die Bogenstücke 34.1 und Tragflanschen 34 sind durch ein achsnormal bezüglich der Längsachse 13 verlaufendes Versteifungsblech 35 versteift (Figur 4). Beide Flansche 35 weisen zueinander fluchtende Befestigungsöffnungen 36 in Form von Langlöchern oder Bohrungen auf.

Die Blechdicke für die ersten Wandteile rl und zweiten Wandteile r2 kann relativ klein sein und z.B. im Bereich zwischen 0,1 und 0,5 mm je nach Größe des Gerätes liegen. Im dargestellten Fall hat das Zentralrohr 5 einen Innendurchmesser von 20 mm, die Radialabstände a1 und a2 betragen für das Gerät RZ2 jeweils 10,5 mm, der Außendurchmesser des Gehäuses 1 129 mm, die Wanddicke der Wand 1.1 2 mm. Die zylindrischen Bleche 2 für die ersten Wandteile r1 und das Zentralrohr 5 für die zweiten Wandteile r2 können analog zum Gerät RZ1 nach den Figuren 1 und 2 Zylinderkörper sein oder aber - was fertigungstechnisch noch günstiger ist - aus einem spiralig gewickelten Blech bestehen, wie es in Figur 5 schematisch dargestellt ist.

Das Gerät RZ2 nach den Figuren 3 und 4 arbeitet wie folgt (wobei die Funktionsbeschreibung sinngemäß auch für das Gerät RZ1 nach den Figuren 1 und 2 gilt): Für eine Zündung an der oberen Zündgrenze werden mindestens 6 Volumen-% O₂ benötigt, was einem Luftanteil von knapp 30% entspricht. Für eine Zündung an der unteren Zündgrenze werden mindestens 4 bis 7 Volumen-% Wasserstoff benötigt, wogegen die obere Zündgrenze hinsichtlich des Wasserstoff-Gehaltes dadurch gekennzeichnet ist, daß mindestens etwa 10 Volumen-% H₂ im Gemisch f1 enthalten sein müssen. Der Restanteil im Gemisch besteht, wie es die bekannten Drei-Stoff-Diagramme zeigen, von denen eines z.B. in der älteren Anmeldung P 40 15 228.5 vom 11.05.1990 in Figur 8 dargestellt ist, aus Wasserdampf und Luft. Im ersten Kanalsystem R wird das zuströmende Gemisch f1, wenn der H₂-Anteil darin unterhalb der unteren Zündgrenze liegt (also unterhalb von ca. 4 - 7 Vol.-%) rekombiniert. Dabei erwärmen sich die ersten Wandteile r1. Steigt der H₂-Anteil bis zur unteren Zündgrenze, dann kommt es im ersten Kanalsystem R zu katalytischen Zündvorgängen, welche durch die Zündelemente z5 (oder im Beispiel nach Figuren 1 und 2 durch die katalytischen Zündelemente z1) ausgelöst werden. Die dabei entstehende Wärme wird auf das zweite Kanalsystem Z, wie beschrieben, übertragen. Dadurch steigt die Temperatur im zweiten Kanalsystem Z bzw. an den zweiten Wandteilen r2 des Zentralrohres 5 im Zeitraum von etwa ein bis fünf Minuten auf Werte über 700°C an. Der durch das zweite Kanalsystem Z strömende zweite Teilstrom f12, der noch nicht rekombiniert ist, wird nun thermisch durch die zweiten Wandteile r2 gezündet. An der schon erwähnten oberen Zündgrenze funktioniert das Gerät RZ2 als thermischer Zünder, d.h. die im ersten Teilstrom fll enthaltene Energie wird an den ersten Wandteilen r1 im wesentlichen adiabatisch in Wärme umgesetzt. Diese Wärme wird von den eine katalytische Beschichtung nicht aufweisenden zweiten Wandteilen r2 des Zentralrohres 5 an das nicht rekombinierte Gemisch f12 übertragen, welches auf diese Weise bis zum Erreichen der Selbstzündungstemperatur erhitzt wird. An der unteren Zündgrenze arbeitet das Gerät RZ2 (und sinngemäß RZ1) nicht mehr als thermischer Zünder, denn die im H₂-armen Gasgemisch f1 enthaltene Energie reicht in Anbetracht von Wärmeübertragungsverlusten zum Erreichen der Selbstentzündungstemperatur innerhalb des Gerätes nicht mehr aus. Deshalb übernehmen anstelle der zweiten Wandteile r2 nun die Zündelemente z5 die Zündfunktion. Diese vorzugsweise als Pt-Drähte oder -Fäden ausgeführten Zündelemente führen punktuell einem sehr kleinen Gasvolumen einen Energiebetrag (sogenannter hot spot) zu, der so hoch ist, daß in diesem Volumen die Zündtemperatur erreicht wird. Diese Funktion der katalytischen Zündung bei relativ geringem H₂-Anteil in der Größenordnung von 4 bis 7 % läuft bei geringem Dampfanteil ab. In einem H₂-Luft-Gemisch ohne Dampf kann mit dem Gerät im Bereich zwischen 4 bis 7 Vol.-% H₂ gezündet werden. H₂-Luft-Dampf-Gemische bis zu etwa 30 Vol.-% Dampf können bei einem H₂-Anteil von mindestens 8 Vol.-% katalytisch gezündet werden. Ab 40 Vol.-% Dampf werden mehr als 10 Vol.-% H₂ für eine thermische Zündung benötigt, die katalytische Zündung arbeitet dann nicht mehr.

Aus Vorstehendem wird ersichtlich, daß durch die Erfindung ein Verfahren zum Rekombinieren und/oder Zünden von Wasserstoff, enthalten in einem H₂-Luft-Dampf-Gemisch verwirklicht wird, für welches die folgenden Verfahrensmerkmale charakteristisch sind:
a) ein erster Teilstrom f11 des H₂-Luft-Dampf-Gemisches f1 wird durch ein erstes Kanalsystem R hindurchgeleitet und durch Kontakt mit eine katalytische Beschichtung 6 aufweisenden ersten, vorzugsweise metallischen, Kanalwänden r1 einer katalytischen Reaktion zur Rekombination von H₂ und O₂ zu H₂O unterworfen. Dabei kann es sich um eine Rekombination (ohne katalytische Zündung) oder aber um eine katalytische Zündung handeln. Diese erfolgt an der sogenannten unteren Zündgrenze und wird durch die Zündelemente z5 (Gerät RZ2) oder die Zündelemente z1 (Gerät RZ1) ausgelöst.
b) Ein zweiter Teilstrom f12 des H₂-Luft-Dampf-Gemisches f1 wird parallel zum ersten Teilstrom f11 durch ein zweites Kanalsystem Z mit wenigstens einer zweiten Kanalwand r2 hindurchgeleitet und dabei an wenigstens einem vorzugsweise metallischen Zündelement z4, z5 vorbeigeführt, welches auf die H₂-Zündtemperatur aufgeheizt wird, so daß der zweite Teilstrom f12 bei Erreichen oder Uberschreiten der Zündgrenze gezündet wird. In diesem zweiten Kanalsystem Z erfolgt, insbesondere bei hohem Dampfanteil im Gemisch f1, eine thermische Zündung an der oberen Zündgrenze (mindestens 10 Vol.-% H₂), und bei geringerem Dampfanteil kann eine Mischzündung erfolgen, d.h. thermische Zündung mit dem Zündelement z4 und katalytische Zündung mit den Zündelementen z5. An der unteren Zündgrenze, wenn das Gemisch f1 keinen Dampf oder nur geringe Volumen- prozente Dampf enthält und der H₂-Anteil im Bereich zwischen 4 und 7 % liegt, kann das zweite Kanalsystem Z auch als katalytischer Zünder arbeiten.

Bevorzugt wird dabei auch das folgende Verfahrensmerkmal angewandt:
c) Die bei der katalytischen Reaktion im ersten Kanalsystem R frei werdende Wärme wird, zumindest zum Teil (das bedeutet mit einem möglichst großen Anteil und mit möglichst geringen Wärmeverlusten), auf das zweite Kanalsystem Z zu dessen Vorwärmung übertragen. Besonderer Vorteil: es kann auf Fremdbeheizung verzichtet werden.

Eine Fremdbeheizung des Zündelementes z4 wird dadurch vermieden, daß es in eine wärmeübertragende Relation mit dem ersten Kanalsystem R gebracht wird, so daß während der Rekombinationsvorgänge im ersten Kanalsystem R erzeugte Wärmemengen auf das Zündelement z4 übertragen werden. Aufgrund der guten Wärmeübertragungseigenschaften des Gerätes gelingt es, die zweiten Wandteile r2 in kurzer Zeit auf über 700° C aufzuheizen, wenn im ersten Kanalsystem R katalytische Zündvorgänge ablaufen.

Hierzu ist es wichtig, daß die zweite Kanalwand r2 in eine gute wärmeübertragende Relation mit dem ersten Kanalsystem R gebracht wird, so daß während der Rekombinationsvorgänge im ersten Kanalsystem R erzeugte Wärmemengen auf die zweite Kanalwand r2 übertragen werden und so das durch das zweite Kanalsystem Z strömende H₂-Luft-Dampf-Gemisch (welches noch nicht rekombiniert ist) an der zweiten Kanalwand vorgewärmt und aufgeheizt wird, bevor bzw. während es an dem Zündelement z4 gezündet wird. Dadurch wird es möglich, daß die zweite Kanalwand r2 selbst als metallisches Flächenzündelement verwendet werden kann. Die Funktion der thermischen Zündung durch die Zündelemente z4 (und z2, z3 nach den Figuren 1 und 2) wird in vorteilhafter Weise ergänzt durch die katalytischen Zündelemente z5 (bzw. z1 in Figuren 1 und 2), so daß im Bereich zwischen der unteren und der oberen Zündgrenze ein lückenloser Übergang von der katalytischen Zündung auf die thermische Zündung und umgekehrt erfolgen kann.

Der erste Teilstrom f11 im ersten Kanalsystem R ist im wesentlichen vertikal von unten nach oben gerichtet, so daß der zugehörige Volumenstrom durch thermisch bedingte Auftriebskräfte stabilisiert wird und sich so eine Konvektionsströmung ausbildet. Dies trifft auch für das zweite Kanalsystem Z zu, wo der zweite Teilstrom f12 im wesentlichen vertikal von unten nach oben gerichtet ist. Der zweite Teilstrom f12 kann, wie in Figur 1 dargestellt, durch wellenförmige Ausbildung angedrosselt und turbulent gestaltet werden. Gesonderte Drosseln am Auslaßende des zweiten Kanalsystems (also die Drosselblende 11 nach Figur 1) sind dann im allgemeinen nicht erforderlich. Bei ausreichend großen Volumenströmen, für welche das Gerät RZ2 nach den Figuren 3 und 4 vorgesehen ist, kann ein Auslaß-Diffusor 20 (siehe Figur 1) entfallen.

Das Gerät RZ2 ist eine Komponente, die naturgemäß in verschiedenen Größen gebaut werden kann. Im Beispiel nach Figuren 3 und 4 beträgt die axiale Länge 270 mm; das Gerät paßt also auch in Winkel und Nischen innerhalb des Containments eines Kernkraftwerks und kann dort in einer Mehrzahl oder Vielzahl von z.B. 100 bis 300 Stück pro Containment installiert werden. Vorteilhaft ist es z.B., eine Vielzahl kleinerer Geräte in der Nähe des Reaktordruckbehälters und der Pumpen und Dampferzeuger bei einem Druckwasserkernkraftwerk zu installieren, so daß der bei einem postulierten Störfall entstehende Wasserstoff unmittelbar benachbart zu seinem Entstehungsort rekombiniert oder verbrannt werden kann. Durch die Zwischenbleche 16 (Figuren 2 und 4) wird die zur Verfügung stehende, katalytisch beschichtete Fläche des Gerätes wesentlich vergrößert; deshalb ist es günstig, diese Zwischenbleche innerhalb aller Ringräume R1 bis R5 vorzusehen (abgesehen davon, daß sie eine mechanische Funktion als Befestigungselemente erfüllen).

Figur 6 zeigt eine dritte grundsätzliche Ausführungsform eines Geräts RZ3, bei welchem zur Bildung des ersten Kanalsystems R und der ersten Wandteile r1 sowie des zweiten Kanalsystems Z und dessen zweiten Wandteilen r2 ebene Bleche 37 vorgesehen sind, welche innerhalb des quaderförmigen Gehäuses 1 zueinander und zur Längsachse 13 des Gehäuses parallel sowie im Abstand zueinander verlaufen. In Figur 6 ist dargestellt, daß die Bleche 37 sich mit weiteren senkrecht dazu verlaufenden Blechen 38 kreuzen. Durch einen im Inneren des Rechteckrasters 37, 38 angeordneten Kanal 39 wird das zweite Kanalsystem Z mit seinen zweiten Wandteilen r2 gebildet. Wie bei 16 angedeutet, können die rechteckigen Gitterzellen noch mittels wellen- oder zick-zack-förmigen Zwischenblechen 16 in Unterkanäle unterteilt werden. Figur 7 zeigt einen Teilquerschnitt mit den beiden einander kreuzenden Blechen 37, 38 und den von diesen gebildeten Gitterzellen 40.

Gemäß einer Variante des Beispiels nach den Figuren 6 und 7, welches in einem Ausschnitt in Figur 8 dargestellt ist, ist auf die Bleche 38 verzichtet, so daß rechteckig-langgestreckte Gitterzellen 41 gebildet werden, und diese sind durch die wellen- oder zick-zack-förmigen Zwischenbleche 16 wieder in Unterkanäle 16.1 unterteilt. Zugleich sorgen die Zwischenbleche 16 wieder für den stabilen mechanischen Zusammenhalt, indem sie z.B. für eine Punktschweißverbindung zwischen sich und den Blechen 37 verwendet sind. Die Darstellung nach den Figuren 6 bis 8 ist ebenso wie diejenige nach Figur 5 lediglich vereinfacht schematisch, weil in den Figuren 1 bis 4 genügend Details dargestellt sind, die natürlich auch sinngemäß für die Ausführungsform nach den Figuren 5 und 6 gelten.

Die Kanalwände r1, r2 bestehen bevorzugt aus Ganzmetall wegen der erwünschten guten Wärmeleitung. Die Gehäusewand 1.1 kann auch aus einer temperaturresistenten Kuststoff-Folie, die an ihrem Innenumfang mit Metall beschichtet ist, bestehen. Dadurch können die Abstrahlungsverluste verringert werden.

## Patentansprüche

1. Verfahren zum Rekombinieren und Zünden von Wasserstoff, enthalten in einem H₂-Luft-Dampf-Gemisch, mit den folgenden Merkmalen:
a) ein erster Teilstrom (f11) des H₂-Luft-Dampf-Gemisches wird durch wenigstens einen ersten Kanal (R) hindurchgeleitet und durch Kontakt mit einer eine katalytische Beschichtung aufweisenden Kanalwand (r1) dieses Kanals (R) einer katalytischen Reaktion zur Rekombination von H₂ und O₂ zu H₂O unterworfen,
b) ein zweiter Teilstrom (f12) des H₂-Luft-Dampf-Gemisches wird zusätzlich zum ersten Teilstrom (f11) durch wenigstens einen zweiten Kanal (Z) mit Kanalwand (r2) hindurchgeleitet und dabei an mindestens einem Zündelement (z) vorbeigeführt, welches auf eine solcheZündtemperatur aufgeheizt wird, daß der zweite Teilstrom (f12) bei Erreichen oder Überschreiten seiner Zündgrenze gezündet wird.
c) die bei der katalytischen Reaktion im ersten Kanal (R) frei werdenden Wärme wird, zumindest zum Teil, auf den zweiten Kanal (Z) zu dessen Vorwärmung übertragen.

2. Verfahren nach Anspruch 1,
**dadurch gekennzeichnet**, daß der erste Teilstrom (f11) im ersten Kanal (R) im wesentlichen vertikal von unten nach oben geleitet wird, so daß er durch thermisch bedingte Auftriebskräfte stabilisiert wird.

3. Verfahren nach einem der Ansprüche 1 oder 2,
**dadurch gekennzeichnet**, daß der zweite Teilstrom (f12) im zweiten Kanal (Z) im wesentlichen vertikal von unten nach oben geleitet wird, so daß er durch thermisch bedingte Auftriebskräfte stabilisiert wird.

4. Verfahren nach einem der Ansprüche 1 bis 3,
**dadurch gekennzeichnet**, daß der zweite Teilstrom (f12) angedrosselt wird.

5. Verfahren nach einem der Ansprüche 1 bis 4,
**dadurch gekennzeichnet**, daß die aus dem ersten und dem zweiten Kanal (R, Z) austretenden ersten und zweiten Teilströme (f12, f22) getrennt voneinander längs einer Trennstrecke solcher Länge geführt werden, daß ein Eindringen des ersten auslaßseitigen Teilstroms (f21) in den zweiten Kanal (Z) und des zweiten auslaßseitigen Teilstroms (f22) in den ersten Kanal (R) verhindert wird.

6. Gerät zur Rekombination und/oder Zündung des in einem H₂-Luft-Dampf-Gemisch enthaltenen Wasserstoffs mit
a) wenigstens einem ersten Kanal (R) mit einer Kanalwand (r1), deren Wandoberfläche eine katalytische Beschichtung (6) zur Rekombination von vorbeiströmendem Wasserstoff und Sauerstoff aufweist,
b) wenigstens einem zum ersten Kanal (R) zusätzlichen zweiten Kanal (Z), dessen Kanalwand (r2) mit mindestens einem vorzugsweise metallischen Zündelement (z) versehen ist, welches auf eine solche Zündtemperatur aufheizbar ist, daß es vorbeiströmende, zündfähige H₂-Luft-Dampfgemische zur Entzündung bringt,
c) Mitteln (r1, 16, r2) zur Einkopplung der bei Rekombinationsvorgängen im ersten Kanal (R) entstehenden Wärme in den zweiten Kanal (Z).

7. Gerät nach Anspruch 6,
**dadurch gekennzeichnet**, daß wenigstens ein Zündelement (z1-z3, z4) durch das Gerät selbst beheizt und hierzu in eine wärmeübertragende Relation, insbesondere in metallisch-leitenden Kontakt, mit den Kanalwänden (r1, r2) gebracht ist.

8. Gerät nach einem der Ansprüche 6 oder 7,
**dadurch gekennzeichnet**, daß die zweite Kanalwand (r2) in eine wärmeübertragende Relation, insbesondere in wärmeleitenden Kontakt, mit dem ersten Kanal (R) gebracht ist, so daß während der Rekombinationsvorgänge im ersten Kanal (R) erzeugte Wärmemengen auf die zweite Kanalwand (r2) übertragen werden und ein durch den zweiten Kanal (Z) strömendes H₂-Luft-Dampf-Gemisch (f12) an der zweiten Kanalwand (r2) vorgewärmt wird, bevor bzw. während es an dem Zündelement (z) gezündet wird.

9. Gerät nach einem der Ansprüche 6 bis 8,
**dadurch gekennzeichnet**, daß durch die zweite Kanalwand (r2) selbst ein Zündelement (z4) in Gestalt eines Flächenzündelementes gebildet ist.

10. Gerät nach einem der Ansprüche 6 bis 10,
**dadurch gekennzeichnet**, daß wenigstens ein Zündelement (z1, z2) in Strömungsräumen (R1-R5) des ersten Kanals (R) angeordnet ist, wenigstens eine der ersten und/oder zweiten Kanalwände (r1, r2) metallisch kontaktiert und sich mit einer Spitze (7) durch eine Kanalwand (r2) des zweiten Kanals (Z) hindurch als Spitzenzündelement in dessen Kanalquerschnitt hinein erstreckt.

11. Gerät nach Anspruch 10, **gekennzeichnet durch** Drahtspiralen als Zündelemente (z1).

12. Gerät nach Anspruch 10, **gekennzeichnet durch** Stifte oder Röhren als Zündelemente (z2).

13. Gerät nach Anspruch 7, **gekennzeichnet durch** dünne, eine katalytische Oberfläche aufweisende Drähte als Spitzenzündelemente (z5), welche wenigstens eine der ersten und/oder zweiten Kanalwände (r1, r2) metallisch kontaktieren und den Einström-Enden der ersten und zweiten Kanäle (R,Z) vorgeschaltet und/oder deren Ausström-Enden nachgeschaltet sind.

14. Gerät nach einem der Ansprüche 6 bis 13,
**dadurch gekennzeichnet**, daß zur Bildung des ersten Kanals (R) Zylinderbleche (2) unterschiedlichen Durchmessers koaxial und konzentrisch zueinander innerhalb einer hohlzylindrischen Gehäusewand (1.1) angeordnet sind, wobei Einlaß- und Auslaßöffnung (3, 4) an den Zylinder-Stirnseiten angeordnet sind.

15. Gerät nach einem der Ansprüche 6 bis 13,
**dadurch gekennzeichnet**, daß zur Bildung des ersten Kanals (R) spiralig und mit Abstand zueinander gewickelte Bleche (2) eine zentrische Gehäuseachse (13) innerhalb einer hohlzylindrischen Gehäusewand (1.1) umgeben, wobei Einlaß- und Auslaßöffnung (3, 4) an den Stirnseiten der Spirale angeordnet sind.

16. Gerät nach Anspruch 14,
**dadurch gekennzeichnet**, daß der zweite Kanal (Z) vom Innenumfang des innersten Zylinderblechs begrenzt ist.

17. Gerät nach Anspruch 15,
**dadurch gekennzeichnet**, daß der zweite Kanal (Z) vom Innenumfang der innersten Spiralwindung der spiralig gewickelten Bleche (2) begrenzt ist.

18. Gerät nach einem der Ansprüche 6 bis 13,
**dadurch gekennzeichnet**, daß zur Bildung des ersten Kanals (R) ebene Bleche (37) im Querschnitt rechteckige Kanäle (40) begrenzen.

19. Gerät nach Anspruch 18,
**dadurch gekennzeichnet**, daß der zweite Kanal (Z) im Inneren eines Rechteckgitters (37, 38) angeordnet ist.

20. Gerät nach Anspruch 18 oder 19,
**gekennzeichnet durch** ein den ersten und des zweiten Kanal (R, Z) umgebendes Rechteckgehäuse (1) mit offenen Stirnseiten zur Bildung der Einlaß- und der Auslaßöffnung (3, 4).

21. Gerät nach einem der Ansprüche 6 bis 20,
**dadurch gekennzeichnet**, daß der erste Kanal (R) durch Einfügen von gewellten oder zick-zack- förmigen und katalytisch beschichteten Einlegeblechen (16) in Unterkanäle (16.1) unterteilt ist.

22. Gerät nach einem der Ansprüche 6 bis 21,
**dadurch gekennzeichnet**, daß die Oberfläche des zweiten Kanals (Z) durch wellrohr- oder spiralförmige Ausbildung (9, 10) der zweiten Kanalwand (r2) vergrößert ist.

23. Gerät nach Anspruch 22, wobei es ein Gehäuse (1) mit wenigstens je einer Einlaß- und Auslaßöffnung (3, 4) für das H₂-Luft-Dampf-Gemisch (f1) aufweist,
**dadurch gekennzeichnet**, daß die Auslaßöffnung (4) durch einen mit Vertikalabstand zu ihr angeordneten Deckel (22) derart abgedeckt ist, daß ein lateraler Ausströmquerschnitt (23, 24) für den ersten und den zweiten Kanal (R,Z) freibleibt, wobei der Deckel (22) Strömungsleitflächen (25) zur Unterstützung der Strömungsumlenkung von der vertikalen in die horizontale Richtung aufweist.

24. Gerät nach einem der Ansprüche 6 bis 23, wobei es ein Gehäuse (1) mit wenigstens je einer Einlaß- und Auslaßöffnung (3, 4) für das H₂-Luft-Dampf-Gemisch (f1) aufweist,
**dadurch gekennzeichnet**, daß unterhalb der Einlaßöffnung (31) ein Strömungsleitkörper (26) angeordnet ist, welcher Strömungsleitflächen (27) zur Umlenkung der Einströmung von der lateralen in die vertikale Richtung aufweist.

25. Gerät nach einem der Ansprüche 6 bis 24,
**dadurch gekennzeichnet** , daß es zum Zwecke der Rekombination bzw. Verbrennung des bei einem Störfall sich bildenden Wasserstoffs im Containment eines Leichtwasser-Kernkraftwerks, in einer Mehrzahl über das Containment verteilt, installiert ist.

26. Gerät nach Anspruch 25,
**dadurch gekennzeichnet**, daß es im Containment eines Druckwasser-Kernkraftwerks installiert ist.

## Claims

1. Process for recombining and igniting hydrogen contained in an H₂-air-steam mixture, comprising the following features:
a) a first partial flow (f11) of the H₂-air-steam mixture is passed through at least one first channel (R) and is subjected to a catalytic reaction for the purpose of recombining H₂ and O₂ to form H₂O by contact with a channel wall (r1) of said channel (R), which wall (r1) has a catalytic coating,
b) in addition to the first partial flow (f11), a second partial flow (f12) of the H₂-air-steam mixture is passed through at least one second channel (Z) having channel wall (r2) and, in this case, is fed past at least one ignition element (z) which is heated to an ignition temperature which is such that the second partial flow (f12) is ignited on reaching or exceeding its ignition limit. [sic]
c) the heat liberated during the catalytic reaction in the first channel (R) is, at least partially, transmitted to the second channel (Z) for the purpose of preheating it.

2. Process according to Claim 1, characterized in that the first partial flow (f11) is fed essentially vertically from the bottom upwards in the first channel (R) so that it is stabilized by thermally generated lifting forces.

3. Process according to either of Claims 1 or 2, characterized in that the second partial flow (f12) is fed essentially vertically from the bottom upwards in the second channel (z), so that it is stabilized by thermally generated lifting forces.

4. Process according to any of Claims 1 to 3, characterized in that the second partial flow (f12) is incipiently throttled.

5. Process according to any of Claims 1 to 4, characterized in that the first and second partial flows (f12, f22) emerging from the first and second channels (R, Z) are fed separately from one another along a separating section which is long enough to prevent the first partial flow (f21) on the outlet side entering the second channel (Z) and the second partial flow (f22) on the outlet side entering the first channel (R).

6. Device for recombining and/or igniting the hydrogen contained in an H₂-air-steam mixture, comprising
a) at least one first channel (R) having a channel wall (r1) whose wall surface has a catalytic coating (6) for recombining hydrogen and oxygen which are flowing past,
b) at least one second channel (Z) which is additional to the first channel (R) and whose channel wall (r2) is provided with at least one, preferably metallic, ignition element (z) which can be heated to an ignition temperature which is such that it ignites ignitable H₂-air-steam mixtures which are flowing past,
c) means (r1, 16, r2) for coupling the heat produced in recombination processes in the first channel (R) into the second channel (Z).

7. Device according to Claim 6, characterized in that at least one ignition element (z1-z3, z4) is heated by the device itself and, for this purpose, is brought into a heat-transmitting relationship, preferably into metallically conducting contact, with the channel walls (r1,r2).

8. Device according to either of Claims 6 or 7, characterized in that the second channel wall (r2) is brought into a heat-transmitting relationship, in particular into heat-conducting contact, with the first channel (R) so that quantities of heat produced during the recombination processes in the first channel (R) are transmitted to the second channel wall (r2) and an H₂-air-steam mixture (f12) flowing through the second channel (Z) is preheated at the second channel wall (r2) before or while it is ignited at the ignition element (z).

9. Device according to any of Claims 6 to 8, characterized in that an ignition element (z4) in the form of a panel type ignition element is formed by the second channel wall (r2) itself.

10. Device according to any of Claims 6 to 10, characterized in that at least one ignition element (z1, z2) is disposed in the flow spaces (R1-R5) of the first channel (R), at least one of the first and/or second channel walls (r1, r2) is metallically contacted and extends by means of a point (7) through a channel wall (r2) of the second channel (Z) into the channel cross section of the latter as a point-type ignition element.

11. Device according to Claim 10, characterized by wire coils as ignition elements (z1).

12. Device according to Claim 10, characterized by pins or tubes as ignition elements (z2).

13. Device according to Claim 7, characterized by thin wires having a catalytic surface as point-type ignition elements (z5) which make metallic contact with at least one of the first and/or second channel walls (r1, r2) and are inserted upstream of the inflow ends of the first and second channels (R, Z) and/or downstream of their outflow ends.

14. Device according to any of Claims 6 to 13, characterized in that, to form the first channel (R), cylindrical metal sheets (2) of various diameter are disposed coaxially and concentrically with one another inside a hollow cylindrical housing wall (1.1), inlet and outlet openings (3, 4) being disposed at the cylinder end faces.

15. Device according to any of Claims 6 to 13, characterized in that, to form the first channel (R), metal sheets (2) wound spirally and at a distance from one another surround a central housing axis (13) inside a hollow cylindrical housing wall (1.1), inlet and outlet openings (3, 4) being disposed at the end faces of the spirals.

16. Device according to Claim 14, characterized in that the second channel (Z) is bounded by the inner circumference of the innermost cylindrical metal sheet.

17. Device according to claim 15, characterized in that the second channel (Z) is bounded by the inner circumference of the innermost spiral winding of the spirally wound metal sheets (2).

18. Device according to any of Claims 6 to 13, characterized in that, to form the first channel (R), flat metal sheets (37) form the boundary of channels (40) which are rectangular in cross section.

19. Device according to Claim 18, characterized in that the second channel (Z) is disposed in the interior of a rectangular grid (37, 38).

20. Device according to Claim 18 or 19, characterized by a rectangular housing (1) surrounding the first and second channels (R, Z) and having end faces to form the inlet and outlet openings (3, 4).

21. Device according to any of Claims 6 to 20, characterized in that the first channel (R) is subdivided into subchannels (16.1) by insertion of corrugated or zigzag-shaped and catalytically coated metal insertion sheets (16).

22. Device according to any of Claims 6 to 21, characterized in that the surface of the second channel (Z) is increased by corrugated tubular or spiral construction (9, 10) of the second channel wall (r2).

23. Device according to Claim 22, which has a housing (1) with at least one inlet and outlet opening (3, 4) in each case for the H₂-air-steam mixture (f1), characterized in that the outlet opening (4) is covered by a lid (22) disposed at a vertical distance from it in such a way that a lateral outflow cross section (23, 24) is left free for the first and second channel (R, Z), the lid (22) having flow guiding surfaces (25) for promoting the deflection of the flow from the vertical to the horizontal direction.

24. Device according to any of Claims 6 to 23, which has a housing (1) with at least one inlet and outlet opening (3, 4) in each case for the H₂-air-steam mixture (f1), characterized in that there is disposed, underneath the inlet opening (31) a flow guiding body (26) which has flow guiding surfaces (27) for deflecting the inflow from the lateral to the vertical direction.

25. Device according to any of Claims 6 to 24, characterized in that it is installed for the purpose of recombining or combusting the hydrogen formed in the event of a malfunction in the containment of a light-water nuclear power station and is distributed in a plurality over the containment.

26. Device according to Claim 25, characterized in that it is installed in the containment of a pressurized-water nuclear power station.

## Revendications

1. Procédé de recombinaison et d'inflammation de l'hydrogène contenu dans un mélange d'H_{2,} d'air et de vapeur ayant les caractéristiques suivantes :
a) on fait passer un premier courant partiel (f11) du mélange d'H_{2,} d'air et de vapeur dans au moins un premier conduit (R) et par contact avec une paroi (r1) de ce conduit (R) comportant un revêtement catalytique on le soumet à une réaction catalytique de recombinaison de H₂ et O₂ en H₂O,
b) on fait passer un deuxième courant partiel (f12) du mélange d'H_{2,} d'air et de vapeur en plus du premier courant partiel (f11) dans au moins un deuxième conduit (Z) ayant une paroi (r2) et ce faisant on le fait passer devant au moins un élément d'allumage (Z) qui est porté à une température d'allumage telle que le deuxième courant partiel (f12) est enflammé lorsqu'il atteint ou lorsqu'il dépasse sa limite d'inflammation,
c) la chaleur dégagée dans le premier conduit (R) lors de la réaction catalytique est transmise au moins en partie au deuxième conduit (Z) pour son pré-chauffage.

2. Procédé selon la revendication 1,
caractérisé en ce que le premier courant partiel (f11) passe dans le premier canal (R) sensiblement verticalement de bas en haut de manière à être stabilisé par des forces ascensionnelles dues à l'effet thermique.

3. Procédé selon l'une des revendications 1 ou 2,
caractérisé en ce que le deuxième courant partiel (f12) passe dans le deuxième canal (Z) sensiblement verticalement de bas en haut de manière à être stabilisé par des forces ascensionnelles dues à l'effet thermique.

4. Procédé selon l'une des revendications 1 à 3,
caractérisé en ce que le deuxième courant partiel (f12) est étranglé.

5. Procédé selon l'une des revendications 1 à 4,
caractérisé en ce que les premier et deuxième courants partiels (f12, f22) sortant du premier et du deuxième conduits (R, Z) sont envoyés indépendamment l'un de l'autre le long d'une zone de séparation d'une longueur telle que toute pénétration du premier courant partiel (f21) du côté de la sortie dans le deuxième canal (Z) et du deuxième courant partiel (f22) du côté de la sortie dans le premier canal (R) est empêchée.

6. Appareil de recombinaison et/ou d'inflammation de l'hydrogène contenu dans un mélange d'H_{2,} d'air et de vapeur comprenant
a) au moins un premier conduit (R) ayant une paroi (r1) dont la surface comporte un revêtement (6) catalytique de recombinaison de l'hydrogène et de l'oxygène qui passe devant lui,
b) au moins un deuxième conduit (Z) en plus du premier conduit (R) dont la paroi (r2) est munie d'au moins d'un élément d'allumage (Z) de préférence métallique qui peut être porté à une température d'allumage telle qu'il porte à l'inflammation des mélanges d'H_{2,} d'air et de vapeur susceptibles d'être enflammés et passant devant lui,
c) des moyens (r1, 16, r2) d'envoi au deuxième conduit (Z) de la chaleur créée dans le premier conduit (R) lors des processus de recombinaison.

7. Appareil selon la revendication 6,
caractérisé en ce qu'au moins un élément d'allumage (z1-z3, z4) est chauffé par l'appareil lui-même et à cet effet est mis en relation d'échange de chaleur notamment en contact de conduction métallique avec les parois (r1, r2) de conduit.

8. Appareil selon l'une des revendications 6 ou 7,
caractérisé en ce que la deuxième paroi (r2) de conduit est mise en relation d'échange de chaleur notamment en contact de conduction de chaleur avec le premier conduit (R) de sorte que les quantités de chaleur produites pendant les processus de recombinaison dans le premier conduit (R) puissent être transmises à la deuxième paroi (r2) de conduit et qu'un mélange (f12) d'H_{2,} d'air et de vapeur passant dans le deuxième conduit (Z) puisse être chauffé préalablement sur la deuxième paroi (r2) de conduit avant d'être enflammé sur l'élément d'allumage (Z) ou pendant qu'il est enflammé sur cet élément.

9. Appareil selon l'une des revendications 6 à 8,
caractérisé en ce que l'élément d'allumage (z4) sous la forme d'un élément d'allumage en surface est formé par la deuxième paroi (r2) de conduit elle-même.

10. Appareil selon l'une des revendications 6 à 9,
caractérisé en ce qu'au moins un élément d'allumage (z1, z2) est prévu dans des espaces (R1-R5) d'écoulement du premier conduit (R) au moins une paroi (r1, r2) du premier ou du deuxième conduit soit en contact par voie métallique et s'étend par une pointe (7) à travers une paroi (r2) du deuxième conduit (Z) en tant qu'élément d'inflamme d'allumage en forme de pointe en pénétrant dans la section transversale de ce conduit.

11. Appareil selon la revendication 10,
caractérisé par des spirales en fil métallique servant d'élément d'allumage (z1).

12. Appareil selon la revendication 10,
caractérisé par des broches ou des tubes servant d'éléments d'allumage (z2) .

13. Appareil selon la revendication 7,
caractérisé par des fils métalliques présentant une surface catalytique servant d'éléments d'allumage (z5) en forme de pointe qui viennent en contact métallique avec au moins l'une des première et/ou deuxième parois (r1, r2) de conduit et qui relient les extrémités amont du premier et du deuxième conduit (R, Z) et/ou leurs extrémités aval.

14. Appareil selon l'une des revendications 6 à 13,
caractérisé en ce que pour former le premier conduit (R) il est prévu des tôles (2) cylindriques de diamètres différents disposées coaxialement et concentriquement l'une à l'autre dans une paroi (1.1) de corps cylindrique creux, des ouvertures d'entrée et de sortie (3, 4) étant prévues sur les côtés frontaux du cylindre.

15. Appareil selon l'une des revendications 6 à 13,
caractérisé en ce que pour former le premier conduit (R), des tôles (2) enroulées en spirale et à distance l'une de l'autre entourent un axe (13) de corps centré à l'intérieur de la paroi (1.1) du corps cylindrique creux, des ouvertures d'entrée et de sortie (3, 4) étant prévues sur les côtés frontaux des spirales.

16. Appareil selon la revendication 14,
caractérisé en ce que le deuxième conduit (Z) est délimité par le pourtour intérieur de la tôle du cylindre qui est la plus à l'intérieur.

17. Appareil selon la revendication 15,
caractérisé en ce que le deuxième conduit (7) est délimité par le pourtour intérieur de la spire de spirale la plus à l'intérieur des tôles (2) enroulées en spirale.

18. Appareil selon l'une des revendications 6 à 13,
caractérisé en ce que pour former le premier conduit (R) des tôles (37) planes délimitent des conduits (40) de sections transversales rectangulaires.

19. Appareil selon la revendication 18,
caractérisé en ce que le deuxième conduit (Z) est disposé à l'intérieur d'une grille (37, 38) rectangulaire.

20. Appareil selon l'une des revendications 18 ou 19,
caractérisé par un corps (1) rectangulaire entourant le premier et le deuxième conduit (R, Z) et ayant des surfaces frontales ouvertes pour former les ouvertures d'entrée et de sortie (3, 4).

21. Appareil selon l'une des revendications 6 à 20,
caractérisé en ce que le premier conduit (R) est subdivisé par insertion de tôles (16) ondulées ou en zigzag revêtues catalytiquement en sous-conduits (16.1).

22. Appareil selon l'une des revendications 6 à 21,
caractérisé en ce que la surface du deuxième conduit (Z) est agrandie par excroissance (9, 10), en forme de tube ondulé ou de spirale, de la deuxième paroi (r2) de conduit.

23. Appareil selon la revendication 22 qui comporte un corps (1) ayant au moins une ouverture d'entrée et de sortie (3, 4) pour le mélange (f1) d'H_{2,} d'air et de vapeur,
caractérisé en ce que l'ouverture (4) de sortie est recouverte d'un couvercle (22) disposé à une certaine distance verticale par rapport à elle de façon à dégager une section transversale (23, 24) latérale de sortie pour le premier et le deuxième conduits (R, Z), le couvercle (22) comportant des surfaces (25) de déviation facilitant la déviation du courant de la direction verticale à la direction horizontale.

24. Appareil selon l'une des revendications 6 à 23, comportant un corps (1) ayant au moins une ouverture d'entrée et de sortie (3, 4) pour le mélange (f1) d'H_{2,} d'air et de vapeur,
caractérisé en ce qu'en dessous de l'ouverture (31) d'entrée est prévue une chicane (26) qui comporte des surfaces (27) de déviation du courant destinées à dévier le courant affluent de la direction latérale à la direction verticale.

25. Appareil selon l'une des revendications 6 à 24,
caractérisé en ce qu'en vue de la recombinaison de la combustion de l'hydrogène se formant en cas d'incident dans l'enceinte de confinement d'un réacteur nucléaire à eau légère, il est monté en une multiplicité répartie sur l'enceinte de confinement.

26. Appareil selon la revendication 25,
caractérisé en ce qu'il est monté dans l'enceinte de confinement d'un réacteur nucléaire à eau sous pression.
